# EUROPEAN PATENT APPLICATION

(11) **EP 2 908 198 A1**
(43) Date of publication of application: **19.08.2015**
(21) Application number: 14155019.4
(22) Date of filing: 13.02.2014
(51) Int. Cl.: G05B 19/05, H04L 12/24

(54) **A method and apparatus for automatically generating hardware configurations in an industrial engineering system**

(71) Applicant: Siemens Aktiengesellschaft, 80333 München (DE)
(72) Inventor: Tushar, Austin, 560071 Bangalore (IN)

(57) **Abstract**

The present invention relates to automatic generation of hardware configurations in an industrial engineering system. According to the present invention, the processor 102 determines type of hardware configuration desired to be generated. For example, the type of hardware configuration may include switched hardware configuration and hybrid hardware configuration. Then, the processor 102 obtains information associated with hardware devices in an industrial setup. For example, the processor 102 may query a user regarding hardware devices to be included in the hardware configuration. The user may provide the information on the hardware devices such as type of the hardware device, unique identifier associated with the hardware device and number of instances of the hardware device. Accordingly, the processor 102 automatically generates the hardware configuration using the information of the hardware devices according to the type of hardware configuration. The hardware configuration may comprise the hardware devices connected to each other according to the type of hardware configuration.

## Description

The present invention generally relates to a field of industrial engineering system, and more particularly relates to automatically generating hardware configurations in an industrial engineering system.

In manufacturing plant, entire production unit is subdivided into different sub units; each sub unit comprises a plurality of hardware devices such as programmable logic controllers (PLCs), sensors, decentral slave devices etc. The hardware devices are responsible for overall operation of the sub unit. In an industrial automation system, each sub unit requires master-slave to be configured for each hardware device depending on type of device and protocol used for communication.

Currently, an engineering application provides an engineering graphical user interface (GUI) editor which facilitates a user to manually create a master-slave configuration. In the engineering application, industrial automation project is created followed by creation of a rack. Thereafter, GUI objects corresponding to hardware devices are added in the rack and connections are made between the GUI objects to form the hardware configuration. For example, the user drags and drops required objects from an engineering catalog and connects appropriate unused port of each object with unused ports of another object in the rack using the engineering GUI editor. Then, the hardware configuration is compiled in a desired format so that the compiled configuration can be downloaded on a programmable logic controller in the manufacturing plant.

Since the production unit comprises large number of hardware devices, manually finding hardware devices in the engineering catalog and creating instances of the same via drag and drop operation for such a large production unit is complex and time consuming activity. In a switched network, slave devices are linked to a master device via an Ethernet switch. In such case, every port of the Ethernet switch needs to be manually connected to a corresponding port of respective slave devices. To achieve this, the user has to navigate between different views and access different controls in the engineering GUI editor. This may consume significant amount of time.

Additionally, the user may need to assign network domain settings for the master device and the slave devices during creation of the hardware configuration. For this, the user has to create a subnet, assign synchronization role for each of slave devices and verify network domain settings to determine whether all the slave devices in the network topology are correctly assigned to the master device. Thus, it is cumbersome for the user to create the network topology. Moreover, when new communication protocols are introduced in the industrial automation project, then the user has to spend time in learning ways to configure and integrate new hardware devices.

In light of the foregoing, there is a need for a method and apparatus for automatically generating hardware configurations with ease.

It is therefore an object of the present invention to provide a method for automatically generating hardware configurations in an industrial engineering system.

The object of the present invention is achieved by a method of automatically generating hardware configurations in an industrial engineering system. The method comprises determining, using a processor, type of hardware configuration desired to be generated. For example, the type of hardware configuration may include switched hardware configuration and hybrid hardware configuration. The type of hardware configuration depends on which communication protocol is going to be used for communication between hardware devices in an industrial setup. The hardware devices may include at least one of a master device, one or more slave devices such as central processing units, input/output devices, decentral slave devices, Ethernet switch and a proxy device. Therein, to determine type of hardware configuration, the master device in the industrial setup is selected and type of port in the master device selected by a user is determined. Further, communication protocol supported by the selected port in the master device is determined. The master device includes two or more ports, each port supporting different communication protocol. Exemplary the communication protocols include PROFINET and PROFIBUS. Furthermore, types of hardware configuration that can be generated based on the determined communication protocol is determined. Thereafter, the type of hardware configuration desired to be generated among the types of hardware configuration is determined. Thus, the present invention intelligently identifies which type of hardware configuration to be generated based on the selected port in the master device. The method further comprises obtaining information associated with the hardware devices in the industrial setup based on the determined type of hardware configuration. For example, if the type of hardware configuration is switched hardware configuration, then information of the hardware devices such as master device, slave devices and Ethernet switch is obtained for generating the hardware configuration. The information associated with the hardware devices may include type, unique identifier, and/or number of instances. In an exemplary embodiment, the information is obtained by querying a user of an engineering application via a graphical user interface. Thus, the user need not select graphical user interface (GUI) objects from an engineering catalogue rather specify the hardware devices via a simple graphical user interface. Advantageously, significant amount of time for navigating through the engineering catalogue, and searching GUI objects in the engineering catalogue is saved. Also, there is no need to have prior knowledge regarding the hardware devices supporting the determined communication protocol as the graphical user interface provides the user with the hardware devices supporting the required communication protocol. Also, the present invention provides the flexibility to support new communication protocols.

The method includes automatically generating the hardware configuration using the information associated with the hardware devices according to the determined type of hardware configuration. Therein, an unused port in an instance of a slave device which supports the determined communication protocol is determined. Then, a connection between the unused port in the instance of the slave device and an unused port of another hardware device is created. The above steps of determining and creating are repeated for all the instances of each of the slave devices. Thus, in the present invention, the hardware configuration is automatically generated based on schematics (master-slave combination, communication protocol and topology) of an industrial plant. Advantageously, the present invention provides an intelligent and simplified engineering application for faster generation of the hardware configuration based on schema of the industrial plant. Further, the present invention eliminates the need to perform network related configuration such as creating subnet and assigning synchronization role for each device and the like, thereby saving time and efforts.

For generating a switched hardware configuration with star topology, initially, an unused port in the instance of the slave device which supports the determined communication protocol is determined. Thereafter, for creating a connection, an Ethernet switch is identified from a plurality of Ethernet switches. Further, an unused port in the identified Ethernet switch which supports the determined communication protocol is determined and the connection between the unused port in the instance of the slave device and the unused port of the Ethernet switch is created. The above steps of determining and creating are repeated for all the instances of each of the slave devices to obtain the switched hardware configuration with star topology. Advantageously, the slave devices are connected to the master device are automatically connected to the Ethernet switch. This eliminates the need to navigate between different views and access different controls in the graphical user interface, thereby significantly reducing effort and time required to create hardware configuration when large number of hardware devices are required to be configured.

For generating a switched hardware configuration with linear topology, initially, an unused port in the instance of the slave device which supports the determined communication protocol is determined. Thereafter, the unused port in the slave device is configured as a partner port to an unused port in a preceding hardware device which supports the determined communication protocol. The preceding hardware device may be the master device or the preceding slave device. Then, the steps of determining and configuring are repeated for all instances of the slave devices to obtain the switched hardware configuration with linear topology. Thus, the present invention enables generation of the hardware configuration based on topology of the industrial plant.

For generating a hybrid hardware configuration, unused port in each instance of the slave devices is determined, and the unused port in said each instance of the slave devices is connected with an unused port of a proxy device connected to the master device.

The method also includes generating visual representation of the hardware configuration and displaying the visual representation of the hardware configuration via the graphical user interface of the engineering application. Thus, the user can preview the hardware configuration and modify the hardware configuration if required.

The object of the present invention can also be achieved by an apparatus for automatically generating hardware configurations in an industrial engineering system. The apparatus comprises a processor and a memory coupled to the processor. The memory comprises a configuration generation module capable of determining type of hardware configuration desired to be generated, and obtaining information associated with hardware devices in an industrial setup based on the type of hardware configuration. The configuration generation module is further capable of automatically generating a hardware configuration using the information associated with the hardware devices according to the type of hardware configuration.

Therein, the configuration generation module is capable of selecting a master device in an industrial setup, and determining type of port in the master device selected by the user. Furthermore, the configuration generation module is capable of determining communication protocol supported by the selected port in the master device, and determining types of hardware configuration that can be generated based on the determined communication protocol. Moreover, the configuration generation module is capable of determining the type of hardware configuration desired to be generated among the determined types of hardware configuration.

Therein, the configuration generation module is capable of querying the information associated with the hardware devices in the industrial setup based on the type of hardware configuration.

Therein, the configuration generation module is capable of determining an unused port in an instance of a slave device which support the determined communication protocol, and creating a connection between the unused port in the instance of the slave device and an unused port in another hardware device. The configuration generation module is further capable of repeating the steps of determining and creating for all the instances of the slave devices.

The memory also comprises a display module configured for generating a visual representation of the hardware configuration, and displaying the visual representation of the hardware configuration. Thus, the user can preview the hardware configuration prior to saving the hardware configuration on a storage unit. Advantageously, the hardware configuration can be modified if the displayed hardware configuration is not acceptable.

The apparatus may be personal computer, laptop, a server computer, a tablet, microprocessor based electronic device and the like comprising an engineering application. Further, the above modules of the present invention may be stored in the memory 104 in the form of machine readable instructions. The machine readable instructions are executed by the processor 102 to perform the intended functionality.

The present invention can be implemented in engineering applications used in industrial automation such as total integrated automation portal.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of an exemplary computing device for automatically generating hardware configurations, according to an embodiment of the present invention.
- FIG 2: is a process flowchart illustrating an exemplary method of automatically generating hardware configurations in an industrial engineering system according to an embodiment of the present invention.
- FIGs 3A-F: are screenshot views depicting process of automatically generating hardware configurations in an industrial engineering system according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

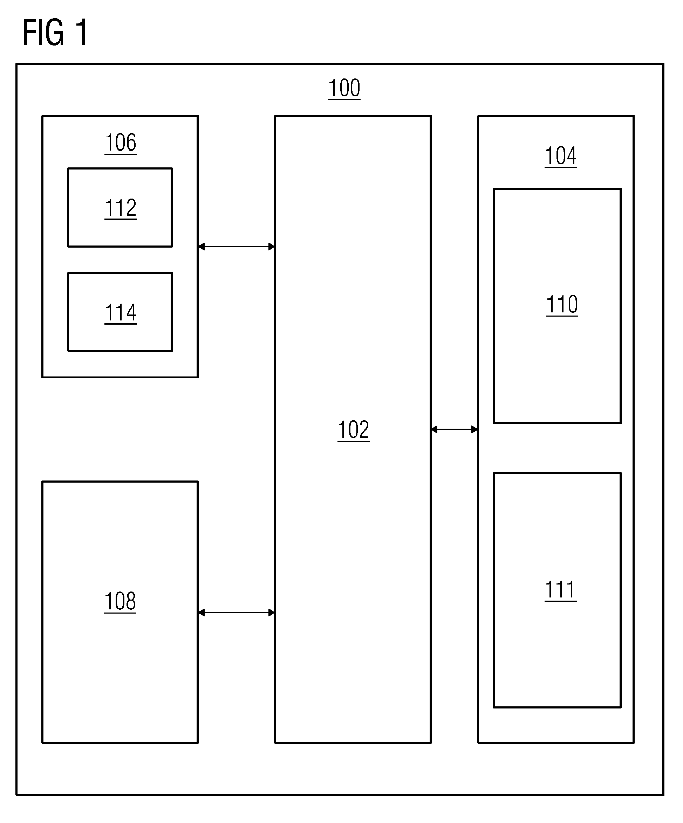

FIG 1 illustrates a block diagram of an exemplary computing device 100 capable of automatically generating hardware configurations in an industrial engineering system according to an embodiment of the present invention. The computing device 100 may be a personal computer, a laptop computer, a server computer, a tablet and the like. In FIG 1, the computing device 100 comprises a processor 102, a memory 104, a storage unit 106, and input/output devices 108.

The processor 102, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 102 may also include embedded controllers, such as generic or programmable logic devices or arrays, application specific integrated circuits, single-chip computers, and the like.

The memory 104 may be volatile memory and non-volatile memory. A variety of computer-readable storage media may be stored in and accessed from the memory 104. The memory 104 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 104 includes a configuration generation module 110, and a display module 111.

The modules 110 and 111 are stored in the form of machine-readable instructions on any of the above-mentioned storage media and may be executed by the processor 102. For example, when executed by the processor 102, the configuration generation module 110, cause the processor 102, to determine type of hardware configuration desired to be generated. For example, the type of hardware configuration may include a switched hardware configuration and hybrid hardware configuration. The switched hardware configuration is one in which slave devices are connected to a master device via an Ethernet Switch. The hybrid hardware configuration is one in which slave devices in PROFIBUS network are connected to a master device of PROFINET network via a proxy. Typically, the type of hardware configuration depends on supported communication protocol such as Process Field Bus (PROFIBUS) and Process Field Network (PROFINET). The communication protocol is determined based on which port of hardware device (i.e., master device) is selected during the hardware configuration.

The configuration generation module 110, cause the processor 102, to obtain information associated with hardware devices in an industrial setup. For example, the processor 102 may query a user regarding hardware devices to be included in the hardware configuration via a graphical user interface of the engineering application. The user may provide the information on the hardware devices such as type of the hardware device, unique identifier associated with the hardware device and number of instances of the hardware device via the graphical user interface. The user may also provide other information such as type of network topology, Ethernet Switch to be used in case of switched hardware configuration or proxy to be used in case of hybrid hardware configuration.

Accordingly, the configuration generation module 110, cause the processor 102, to automatically generate the hardware configuration using the information of the hardware devices according to the type of hardware configuration. The hardware configuration may comprise the hardware devices connected to each other based on the determined type of hardware configuration. For example, the hardware devices may include ports which support different type of communication protocol. Therefore, it is important to ensure that ports of the hardware devices support same communication protocol prior to making a connection. According to the present invention, the processor 102 intelligently identifies ports in the hardware devices which support same communication protocol and makes the connection between the hardware devices during generation of the hardware configuration.

The display module 111, cause the processor 102, to generate a visual representation of the generated hardware configuration. In exemplary implementation, the display module 111 may generate visual representation of the hardware configuration using visual template objects (e.g., images) corresponding to master device, slave devices, Ethernet port, Proxy device, and connection objects stored in the storage unit 106. The display module 111, cause the processor 102, to display the visual representation of the generated hardware configuration on the graphical user interface.

The storage unit 106 may be a non-transitory storage medium configured for storing databases. For example, the storage unit 106 contains the hardware database 112 for storing information corresponding to different hardware devices (e.g., programmable logic controller, decentral device, etc.) and visual template objects corresponding to each of the hardware devices, and the configuration database 114 for storing the hardware configuration. It can be noted that the hardware database 112 and the configuration database 114 may be located at a remote server and may be remotely accessed via a network connection.

The input/output devices 108 may include keyboard, keypad, monitor, touch sensitive display screen, mouse and the like. The input device/output devices 108 enable the user to interface with the computing device 100 for providing information of the hardware devices, previewing hardware configuration and so on. For example, the input device may enable providing information of the hardware devices while the output device may preview the visual representation of the hardware configuration.

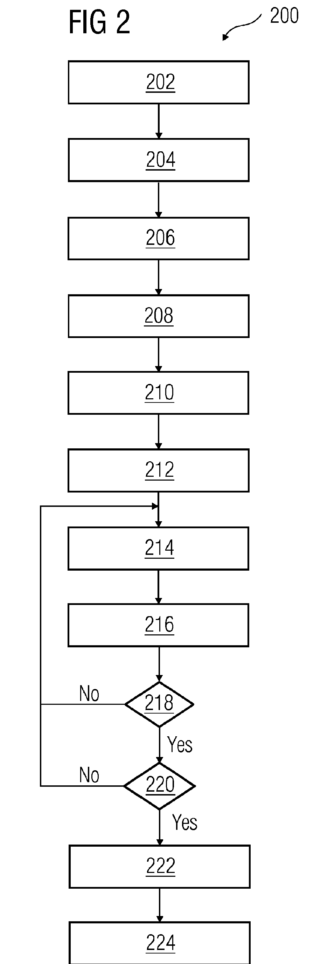

FIG 2 is a process flowchart 200 illustrating an exemplary method of automatically generating hardware configuration in an industrial engineering system according to an embodiment of the present invention. When a user wishes to create a hardware configuration using an engineering application in an industrial engineering system, the user selects a master device (e.g., a programmable logic controller (PLC) in an industrial setup. For example, the master device is initially instantiated manually. Alternatively, the master device may be selected from existing hardware configuration stored in the configuration database 114. Accordingly, at step 202, selection of the master device using the engineering application is detected. At step 204, type of port in the master device selected by the user is determined. For example, the master device may consist of one or more ports which support different communication protocols. If the user wishes to make a PROFIBUS based hardware configuration, the user may select the port which supports the PROFIBUS. On the other hand, the user may select the port supporting PROFINET if the user wishes to make a PROFINET based hardware configuration. At step 206, communication protocol supported by the selected port in the master device is determined. That is based on the port selected, it is determined whether the communication protocol to be used for generating the hardware configuration is PROFIBUS or PROFINET.

At step 208, types of hardware configuration that can be generated is determined based on the determined communication protocol. For example, types of hardware configuration include switched hardware configuration and hybrid hardware configuration if the communication protocol is PROFINET. If the communication protocol is PROFIBUS, the types of hardware configuration include one to one master slave hardware configuration (without use of switch) and hybrid hardware configuration. In an exemplary implementation, the types of hardware configuration are determined using the mapping between the communication protocol and types of hardware configuration. At step 210, type of the hardware configuration that the user wish to generate is determined. For example, the user may select one of types of hardware configurations that can be generated using the graphical user interface of the engineering application. Accordingly, the processor 102 determines the type of hardware configuration that the user wishes to generate based on the selection by the user.

At step 212, information associated with hardware devices to be included in the hardware configuration is queried to the user via the graphical user interface. For example, the information associated with the hardware devices may include device type, unique identifier (e.g., order number) and number of instances. The user may input the information via the graphical user interface.

At step 214, an unused port in an instance of a hardware device which supports the determined communication protocol is determined. At step 216, connection between the unused port in the instance of the hardware device and an unused port in another hardware device (i.e., master device, slave device or Ethernet switch) is created according to the type of hardware configuration. For example, if the type of hardware configuration is switched hardware configuration with star topology, then the unused port in the instance of the hardware device (i.e., slave device) is connected to an unused port of an Ethernet switch connected to a master device. If the type of hardware configuration is switched hardware configuration with linear topology, then the unused port in the instance of the hardware device (i.e., slave device) is connected to an unused port of a preceding hardware device (i.e., master device or slave device) .

At step 218, it is determined whether the connection is created for all instances of the hardware device. If the connection is not created for all instances of the hardware device, then the process is routed to step 214. If the connection is created for all instances of said hardware device, then at step 220, it is determined whether the connection is created for all the hardware devices. If the connection is not created for all the hardware devices, then the process is routed to step 214.

If the connection is completed for all the hardware devices, then at step 222, visual representation of the hardware configuration is generated. The visual representation of the hardware configuration may contain representation of the hardware configuration as graphics objects. At step 224, a preview of the visual representation of the hardware configuration is displayed on the graphical user interface. In some embodiments, the graphical user interface enables the user to view and modify the hardware configuration. If the hardware configuration is acceptable, then the hardware configuration is stored in the configuration database 114. Thereafter, the hardware configuration is compiled in a required format (.DAT or .XML) and downloaded to a programmable logic controller (PLC) in the industrial setup. One skilled in the art can envision that the above steps can be used to expand existing hardware configuration. This is applicable in case of existing industrial setup being expanded.

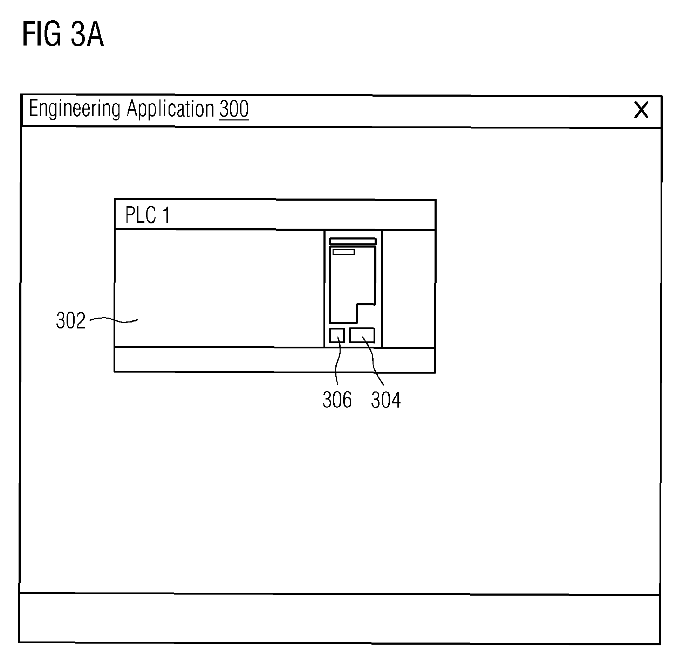

FIG 3A to FIG 3F are screenshot views depicting process of automatically generating hardware configurations in an industrial engineering system according to an embodiment of the present invention. FIG 3A illustrates a screenshot view of an engineering application 300. Consider that, the master device 302 is selected using an engineering catalogue in the engineering application 300. The master device 302 consists of port 304 and 306. The port 304 supports PROFINET communication protocol while the port 306 supports PROFIBUS communication protocol. Consider that the user has selected the port 304. Since the port 304 supports the PROFINET communication protocol, the types of hardware configuration, i.e., switched hardware configuration and hybrid hardware configuration, are displayed in the engineering application upon selection of 'create hardware configuration' link.

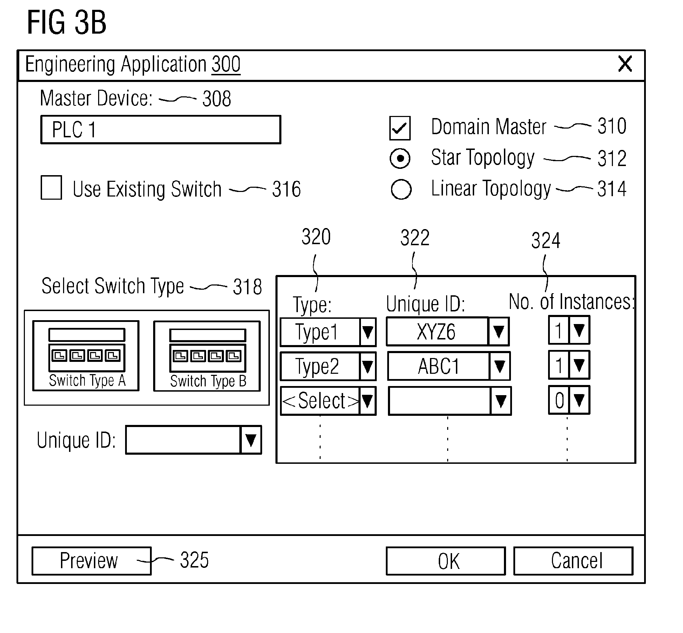

Upon selection of the switched hardware configuration, a configuration window is opened in the engineering application 300 as illustrated in FIG 3B. The master device field 308 indicates name of the master device 302 selected by the user. The domain master button 310 allows the user to set the master device 302 as domain master. The star topology button 312 enables the user to create hardware configuration with star topology. In the hardware configuration with star topology, the slave devices (e.g., PLCs and decentral slave devices) are connected to the master device 302 via an Ethernet switch. The linear topology button 314 enables the user to create hardware configuration with linear topology. In the hardware configuration with linear topology, slave devices and the master device 302 are connected in a linear fashion.

The existing switch field 316 enables to use an Ethernet switch connected to the master device 302. The field 316 lists out one or more Ethernet switches currently connected to the master device 302 and having one or more unused ports that support the PROFINET communication protocol. If the user does not wish to use the existing Ethernet switch, then 'switch type' field 318 provides an option to select a new Ethernet switch. For this the user need to select a switch type and unique identifier for the selected switch type.

The type field 320 enables the user to select device type associated with slave device. The unique identifier field 322 enables the user to select unique identifier associated with the slave device of the selected device type. The number of instances field 324 allows the user to use one or more instances of same slave device. In the present invention, the fields 320 and 322 filters and displays slave devices which support the determined communication protocol. Thus, using the fields 320, 322, and 324, the user can select the slave devices such as central processing units (CPUs) or decentral devices which support the determined communication protocol. Once the topology type, the Ethernet switch information and slave device information is provided via the engineering application 300, the processor 102 automatically generates hardware configuration as described in FIG 2. The preview button 325 enables the user to preview the hardware configuration.

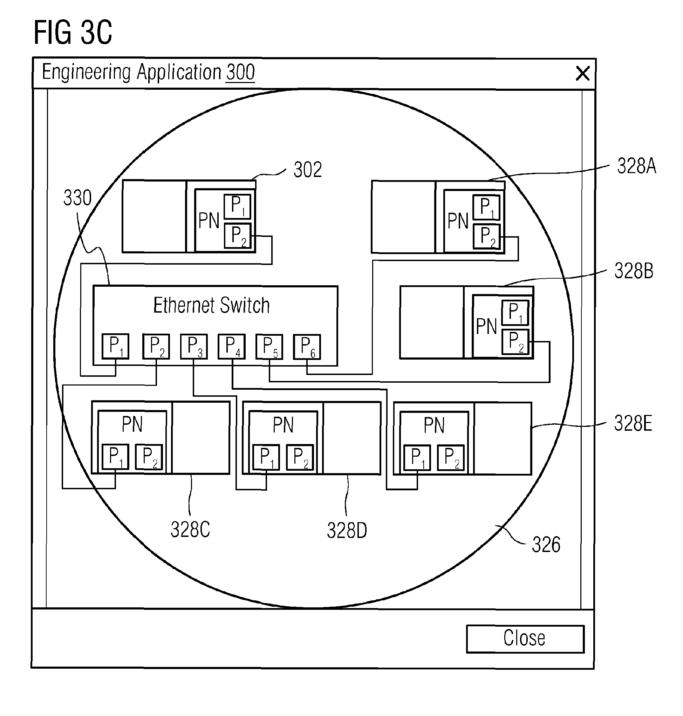

Consider that the user has preferred for the switched hardware configuration with star topology. In such case, when the user clicks on the preview button 325, the engineering application 300 displays preview of the hardware configuration 326 as illustrated in FIG 3C.

As depicted in FIG 3C, the hardware configuration 326 comprises the master device 302, the slave devices 328A-328E, and the Ethernet switch 330. The master device 302 is set as sync domain master and the slave devices 328A-E are set as sync domain slaves. The port P2 of the master device 302 is connected to the port P1 of the Ethernet switch 330. The port P2 of the slave device 328A is connected to the port P6 of the Ethernet switch 330. The port P2 of the slave device 328B is connected to the port P5 of the Ethernet switch 330. The port P1 of the slave device 328C is connected to the port P2 of the Ethernet switch 330. The port P1 of the slave device 328D is connected to the port P3 of the Ethernet switch 330. The port P1 of the slave device 328E is connected to the port P4 of the Ethernet switch 330. If the hardware configuration 326 is acceptable to the user, then the user may continue to save the hardware configuration 326 in the configuration database 114, else the user may modify the hardware configuration 326. Further, the hardware configuration 326 can be linked to factory network via a factory Ethernet switch for communicating and monitoring.

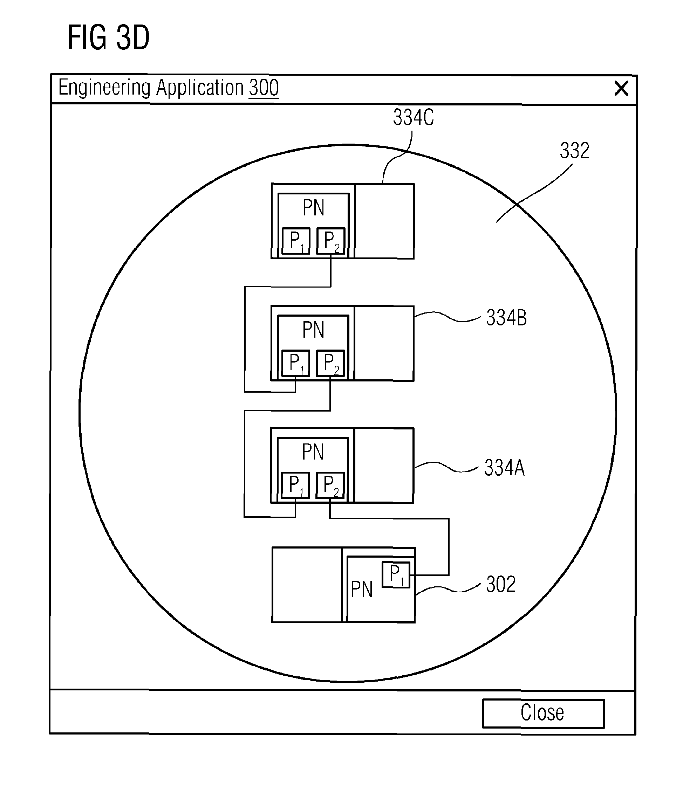

If the user has preferred the switched hardware configuration with linear topology, then preview of the hardware configuration 332 is displayed in the engineering application 300 upon clicking the preview button 325 as illustrated in FIG 3D. The hardware configuration 332 includes the master device 302, and the slave devices 334A-334C. In the hardware configuration 332, the port P1 of the master device 302 is connected to the port P2 of the slave device 334A. The port P1 of the slave device 334A is connected to the port P2 of the slave device 334B. The port P1 of the slave device 334B is connected to the port P2 of the slave device 334C. Once the hardware configuration 332 is formed, the hardware configuration 332 can be linked to factory network via a factory Ethernet switch for communicating and monitoring.

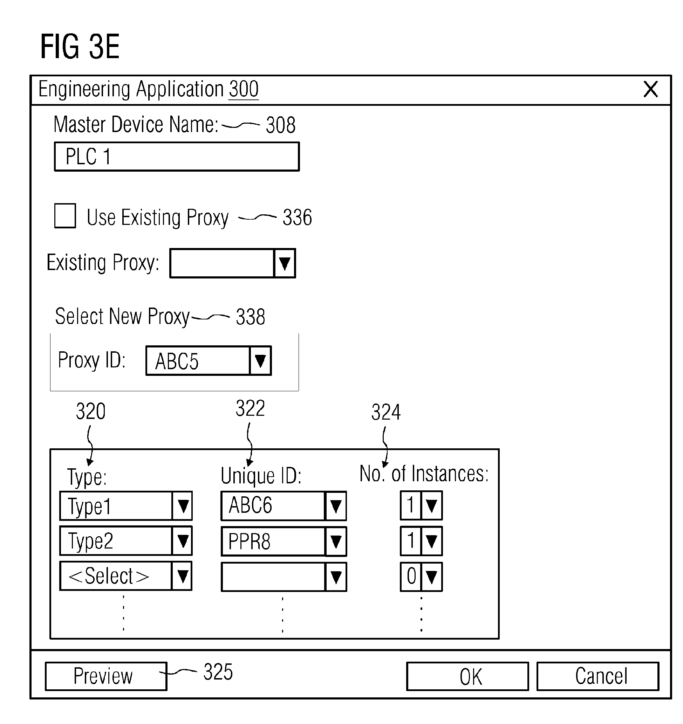

If the user opts to create a hybrid hardware configuration in FIG 3A, a configuration window is opened in the engineering application 300 as shown in FIG 3E. The hybrid hardware configuration consists of different networks supporting distinct communication protocols connected to one another via proxy (also known as gateway). For example, PROFINET provides a facility to integrate PROFIBUS field bus system into PROFINET. To achieve this, a proxy device is used which has PROFIBUS and PROFINET interface to integrate the different networks. The hybrid hardware configuration option can be used when the master device 302 support different communication protocol as that of slave devices.

Referring to FIG 3E, the master device field 308 indicates name of the master device 302 selected by the user in FIG 3A. The existing proxy field 336 enables to use an existing proxy device connected to the master device 302. The field 336 lists out one or more existing proxy device currently connected to the master device 302. If the user does not wish to use the existing proxy device, then 'new proxy' field 338 provides an option to select a new proxy device. For this, the user needs to select a proxy identifier from the drop down box.

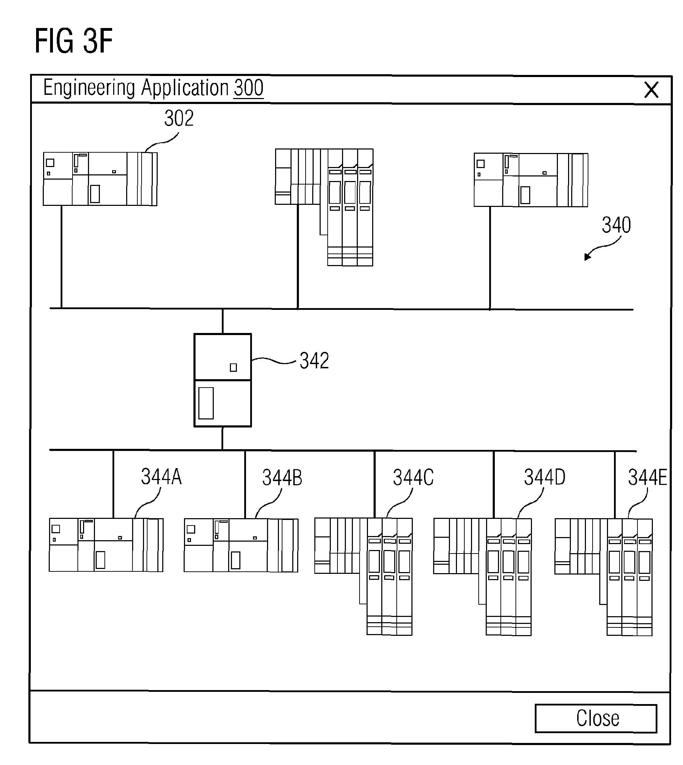

The type field 320 enables the user to select device type associated with slave device. The unique identifier field 322 enables the user to select unique identifier associated with the slave device of the selected device type. The number of instances field 324 allows the user to use one or more instances of same slave device. Using these fields 320, 322, and 324, the user can select the slave devices such as central processing units (CPUs) or decentral devices. Once the proxy device information and slave device information is provided via the engineering application 300, the processor 102 automatically generates hardware configuration as described in FIG 2. The preview button 325 enables the user to preview the hybrid hardware configuration as illustrated in FIG 3F.

In FIG 3F, the hybrid hardware configuration 340 is depicted in which the slave devices 344A to 344E supporting the PROFIBUS communication protocol is connected to PROFIBUS port of the proxy device 342. The proxy device 342 is also connected to the PROFINET port of the master device 302. Thus, in the hardware configuration 340, new PROFIBUS network of slave devices 344A-E is connected to the existing PROFINET network including the master device 302.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### List of references

- 100: - Computing device
- 102: - Processor
- 104: - Memory
- 106: - Storage unit
- 108: - Input/output device
- 110: - Configuration generation module
- 111: - Display module
- 112: - Hardware device database
- 114: - Configuration database
- 300: - Engineering application
- 302: - Master device
- 304: - Port
- 306: - Port
- 308: - Master device field
- 310: - Domain master field
- 312: - Star topology field
- 314: - Linear Topology field
- 316: - Existing switch field
- 318: - Switch type field
- 320: - Type field
- 322: - Unique ID field
- 324: - No. of instance field
- 325: - Preview field
- 326: - Hardware configuration with star topology
- 328A-E: - Slave devices
- 330: - Ethernet Switch
- 332: - Hardware configuration with linear topology
- 334A-C: - Slave devices
- 336: - Existing Proxy field
- 338: - New Proxy field
- 340: - Hybrid hardware configuration
- 342: - Proxy device
- 344A-E: - Slave devices

## Claims

1. A method of automatically generating hardware configuration (326, 332, 340) in an industrial engineering system, comprising:
determining, using a processor (102), type of hardware configuration desired to be generated;
obtaining information associated with hardware devices in an industrial setup based on the determined type of hardware configuration; and
automatically generating the hardware configuration (326, 332, 340) according to the type of hardware configuration using the information associated with the hardware devices.

2. The method according to claim 1, further comprising:
generating a visual representation of the generated hardware configuration (326, 332, 340).

3. The method according to claim 2, further comprising:
displaying the visual representation of the generated hardware configuration (326, 332, 340) on a graphical user interface.

4. The method according to claim 1, wherein the hardware devices comprises at least one of master device (302), one or more slave devices (328A-E, 334A-C, 344A-E), and an Ethernet switch (330).

5. The method according to claim 4, wherein determining the type of hardware configuration comprises:
selecting the master device (302) in the industrial setup;
determining type of port (304, 306) in the master device (302) selected by the user;
determining communication protocol supported by the selected port (304, 306) in the master device (302);
determining types of hardware configuration that can be generated based on the determined communication protocol; and
determining the type of hardware configuration desired to be generated among the determined types of hardware configuration.

6. The method according to claim 1, wherein obtaining the information associated with the hardware devices comprises:
querying the information associated with the hardware devices via the graphical user interface (300) based on the type of hardware configuration.

7. The method according to claim 6, wherein the information associated with the hardware devices comprises type information (320), unique identifier (322), and number of instances (324) of specific type of hardware device.

8. The method according to claims 5 and 7, wherein automatically generating the hardware configuration (326, 332, 340) comprises:
determining an unused port (P1, P2) in an instance of one of the slave devices (328A-E, 334A-C, 344A-E) which support the determined communication protocol;
creating a connection between the unused port (P1, P2) in the instance of said one of the slave devices (328A-E, 334A-C, 344A-E) and an unused port in another hardware device;
repeating the steps of determining and creating for remaining instances of the slave device (328A-E, 334A-C, 344A-E); and
repeating the above steps for the remaining slave devices (328A-E, 334A-C, 344A-E).

9. The method according to claim 8, wherein creating the connection between the unused port (P1, P2) of said one of the slave devices (328A-E) and the selected port (304, 306) in the master device (302) comprises:
identifying an Ethernet switch (330) from a plurality of Ethernet switches if the type of hardware configuration is switched hardware configuration with star topology;
determining an unused port (P1 to P6) in the identified Ethernet switch (330) which supports the determined communication protocol; and
creating the connection between the determined unused port (P1, P2) in the instance of the slave device (328A-E) and the unused port (P1 to P6) of the Ethernet switch (330).

10. The method according to claims 5 and 7, wherein automatically generating the hardware configuration (326, 332, 340) comprises:
determining an unused port (P1, P2) in an instance of one of the slave devices (334A-C) which support the determined communication protocol;
configuring the unused port (P1, P2) in the instance of the slave device (334A-C) as a partner port to an unused port in a preceding hardware device which supports the communication protocol if the type of hardware configuration is switched hardware configuration with linear topology, the preceding hardware device is the master device (302) or the preceding slave device (334A-C); and
repeating the steps of determining and configuring for all the instances of the slave devices (334A-C).

11. The method according to claims 5 and 7, wherein automatically generating the hardware configuration (326, 332, 340) comprises:
determining an unused port (P1, P2) in each instance of one
of the slave devices (344A-E); and
connecting the unused port (P1, P2) in said each instance of the slave devices (344A-E) with an unused port of a proxy device (342) connected to the master device (302).

12. An apparatus (100) comprising:
a processor (102); and
a memory (104) coupled to the processor (102), wherein the memory (104) comprises a configuration generation module (110) capable of:
determining type of hardware configuration desired to be generated;
obtaining information associated with hardware devices in an industrial setup based on the type of hardware configuration; and
automatically generating a hardware configuration (326, 332, 340) according to the type of hardware configuration using
the information associated with the hardware devices.

13. The apparatus (100) according to claim 12, wherein the memory (104) comprises a display module (111) capable of:
generating a visual representation of the generated hardware configuration (326, 332, 340); and
displaying the visual representation of the generated hardware configuration (326, 332, 340).

14. The apparatus (100) according to claim 12, wherein the hardware devices comprises at least one of master device (302), one or more slave devices (328A-E, 334A-C, 344A-E), and an Ethernet switch (330).

15. The apparatus (100) according to claim 14, wherein in determining the type of hardware configuration desired to be generated, the configuration generation module (110) is capable of:
selecting the master device (302) in the industrial setup;
determining type of port (304, 306) in the master device (302) selected by the user;
determining communication protocol supported by the selected port (304, 306) in the master device (302);
determining types of hardware configuration that can be generated based on the determined communication protocol; and
determining the type of hardware configuration desired to be generated among the determined types of hardware configuration.

16. The apparatus (100) according to claim 12, wherein in obtaining the information associated with the hardware devices, the configuration generation module (110) is capable of:
querying the information associated with the hardware devices based on the type of hardware configuration.

17. The apparatus (100) according to claim 16, wherein the information associated with the hardware devices comprises type information (320), unique identifier (322), and number of instances (324) of specific type of hardware device.

18. The apparatus (100) according to claims 15 and 17, wherein in automatically generating the hardware configuration (326, 332, 340), the configuration generation module (110) is capable of:
determining an unused port (P1, P2) in an instance of one of the slave devices (328A-E, 334A-C, 344A-E) which support the determined communication protocol;
creating a connection between the unused port (P1, P2) in the instance of said one of the slave devices (328A-E, 334A-C, 344A-E) and an unused port in another hardware device;
repeating the steps of determining and creating for remaining instances of the slave device (328A-E, 334A-C, 344A-E); and
repeating the above steps for the remaining slave devices (328A-E, 334A-C, 344A-E).
